# EUROPEAN PATENT SPECIFICATION

(11) **EP 3 533 834 B1**
(45) Date of publication and mention of the grant of the patent: **27.03.2024**
(21) Application number: 17865761.5
(22) Date of filing: 27.10.2017
(51) Int. Cl.: C08L 71/08, B29C 45/00, C08J 5/04, C08K 5/00, C08K 7/02, C08L 23/06

(54) **PEEK RESIN COMPOSITION MOLDED ARTICLE**
FORMARTIKEL AUS EINER PEEK-HARZZUSAMMENSETZUNG
ARTICLE MOULÉ DE COMPOSITION DE RÉSINE PEEK

(30) Priority: 27.10.2016 JP 2016210396
(43) Date of publication of application: 04.09.2019
(73) Proprietor: Daicel Polymer Ltd., Tokyo 108-8231 (JP)
(72) Inventor: YASUOKA Shohei, Himeji-shi Hyogo 671-1123 (JP); KATAYAMA Hiroshi, Himeji-shi Hyogo 671-1123 (JP)
(74) Representative: Grünecker Patent- und Rechtsanwälte PartG mbB
(86) International application number: PCT/JP2017/038858
(87) International publication number: WO 2018/079700

(56) References cited:
- EP-A1- 2 725 055
- JP-A- H04 357 005
- JP-A- H05 185 426
- JP-A- S57 181 852
- JP-A- 2009 074 043
- JP-A- 2009 074 043
- JP-A- 2009 155 392

## Description

### Technical Field

The present invention relates to a molded body formed of a PEEK (polyether ether ketone) resin composition, and a production method thereof.

### Background Art

Molding materials using a PEEK resin and a fiber material are proposed.

JP-B 5589971 describes an invention on a molding material, which includes: a composite of a continuous reinforcing fiber bundle and a PEEK oligomer (melting point: 270°C or lower); and a thermoplastic resin adhering to the composite (Claim 1). It describes a PEEK resin as a thermoplastic resin (Claim 5); and describes that the form of the molding material is a long-fiber pellet with a core-sheath structure (Claims 7 and 8).

JP-B 5614382 describes an invention on a method for producing a molding material, which includes adhering a thermoplastic resin to a composite of a continuous reinforcing fiber bundle and a PEEK resin; and it describes that the PEEK resin is prepared by polymerizing a PEEK oligomer using a polymerization catalyst after specific processes (Claim 1). It describes a PEEK resin as the thermoplastic resin (Claim 6); and describes that the form of the molding material is a long-fiber pellet with a core-sheath structure (Claims 9 and 10).

JP-B 5547399 describes an invention on a method for producing a composite material, which includes contacting a polymeric material (PEEK resin with a level of crystallinity of 10% or more) with a discontinuous fibrous filler or a non-fibrous filler (Claim 1). It describes that the composite material is in a particulate form (Claim 3).
EP2725055A1 and JP2009074043A also relate to molded bodies.

### Summary of Invention

An object of the present invention is to provide a molded body formed of a PEEK resin composition, which contains PEEK resin-adhered fiber bundles, wherein since a fiber length remaining in the molded body is long, the molded body has an excellent mechanical strength.

The present invention provides a molded body according to claim 1. Preferred embodiments are defined in claims 2 to 5. Further, the present invention provides a method for producing a molded body according to claim 6.

The molded body of the present invention is excellent in the mechanical strength.

### Description of Embodiments

### <PEEK resin composition>

A PEEK resin composition to be used in the present invention may be composed of only a PEEK resin-adhered fiber bundle, and may contain a PEEK resin-adhered fiber bundle and other component.

The PEEK resin-adhered fiber bundle is a bundle prepared by adhering and integrating a melted PEEK resin to and with a bundle of fibers bundled in a state of being aligned in a longitudinal direction, and cutting the bundle into a length of 5 to 20 mm. The length of the PEEK resin-adhered fiber bundle is the same as the fiber length of reinforcing fibers contained in the fiber bundle.

The PEEK resin-adhered fiber bundle includes, depending on the adhering state of a PEEK resin to a fiber bundle,
a bundle in a state where the PEEK resin is penetrated (impregnated) into a center portion of the fiber bundle and the PEEK resin is infiltrated between fibers at the center portion forming the fiber bundle (hereinafter, referred to as "resin-impregnated fiber bundle");
a bundle in a state where only a surface of the fiber bundle is coated with the PEEK resin (hereinafter, referred to as "fiber bundle with a surface coated with a resin"); and
a bundle in a state between the above two states (a surface of the fiber bundle is coated with the PEEK resin, the PEEK resin is impregnated only into the vicinity of the surface, and the resin is not infiltrated into the center portion) (hereinafter, referred to as "partially resin-impregnated fiber bundle").

As the PEEK resin-adhered fiber bundle, a PEEK resin-impregnated fiber bundle is preferred from the viewpoint of the dispersibility and the fluidity.

As a fiber (reinforcing fiber) contained in the PEEK resin-adhered fiber bundle, usable are known reinforcing fibers such as glass fibers, carbon fibers, organic fibers, metal fibers, and inorganic fibers (excluding glass fibers). Among these fibers, glass fibers or carbon fibers are preferred. As the glass fibers, usable are E glass fiber, C glass fiber, S glass fiber, D glass fiber, and others.

As the carbon fibers, PAN-based or pitch-based carbon fibers are usable.

The fiber number of glass fibers or carbon fibers in the fiber bundle is not particularly limited, but, for example, it is preferably 500 to 25,000, and more preferably 2,000 to 15,000.

The PEEK (polyether ether ketone) resin contained in the PEEK resin-adhered fiber bundle preferably has an MVR (temperature: 380°C, load: 5 kg) of 50 cm³/10 min or more, more preferably 65 cm³/10 min or more, and further preferably 90 to 180 cm³/10 min.

A content ratio of the PEEK resin or the reinforcing fiber in the total thereof in the PEEK resin-adhered fiber bundle is as follows:
the content of the PEEK resin is preferably 30 to 90% by mass, more preferably 35 to 85% by mass, and further preferably 40 to 80% by mass; and
the content of the reinforcing fiber is preferably 10 to 70% by mass, more preferably 15 to 65% by mass, and further preferably 20 to 60% by mass.

The PEEK resin-adhered fiber bundle can be produced by a well-known production method using a die, and applicable production methods are disclosed in, for example, paragraph number 7 of JP-A 6-313050, paragraph number 23 of JP-A 2007-176227, and others such as JP-B 6-2344 (Method for manufacturing resin-coated long fiber bundle and molding method), JP-A 6-114832 (Fiber-reinforced thermoplastic resin structure and manufacturing method thereof), JP-A 6-293023 (Method for manufacturing long fiber-reinforced thermoplastic resin composition), JP-A 7-205317 (Method for taking out fiber bundle and producing long fiber-reinforced resin structure), JP-A 7-216104 (Method for manufacturing long fiber-reinforced resin structure), JP-A 7-251437 (Method and device for manufacturing long fiber-reinforced thermoplastic composite material), JP-A 8-118490 (Crosshead die and method for manufacturing long fiber-reinforced resin structure), and the like.

The PEEK resin composition to be used in the present invention may further contain, in addition to the PEEK resin-adhered fiber bundle, one, two or more of lubricants selected from fatty acid amides, fatty acid esters, fatty acid metal salts and polyethylene wax. The lubricant is preferably selected from ethylenebis stearic acid amide, montan acid ester wax, polyglycerol stearate, calcium stearate, magnesium stearate and polyethylene wax.

In the composition of the present invention, the lubricant is added thereto separately from the PEEK resin-adhered fiber bundle (that is, externally added) and contained therein, and it is not contained in the PEEK resin-adhered fiber bundle. If the lubricant is contained in only the PEEK resin-adhered fiber bundle (that is, internally added), this does not provide a sufficient improvement effect of the fluidity and it is not preferred. A content of the lubricant is preferably 0.005 to 0.1 parts by mass and more preferably 0.005 to 0.05 parts by mass relative to 100 parts by mass of the PEEK resin-adhered fiber bundle.

The PEEK resin composition to be used in the present invention may contain, as other component, if necessary, a flame retardation assistant, a heat stabilizer, a light stabilizer, an antioxidant, a coloring agent, a mold release agent, an antistatic agent or the like within such a range that can resolve the problem to be solved by the present invention. When these other components are contained, they are preferably contained by being internally added to the PEEK resin-adhered fiber bundle.

### <Molded body of PEEK resin composition and production method thereof>

A molded body of the present invention is produced by molding the above-described PEEK resin composition. A fiber content in the molded body of the preset invention corresponds to the content ratio of reinforcing fibers in the PEEK resin-adhered fiber bundle when the PEEK resin composition is composed of only PEEK resin-adhered fiber bundles; and, when the PEEK resin composition is composed of the PEEK resin-adhered fiber bundle and other component such as a lubricant, it corresponds to the content ratio excluding the other component.

However, the content ratio of the other component including a lubricant is less than 1% by mass or small, so the content ratio of reinforcing fibers in the molded body is substantially a content ratio of reinforcing fibers in the PEEK resin-adhered fiber bundle.

The reinforcing fibers contained in the molded body have a weight average fiber length of 0.4 to 3 mm, preferably 0.5 to 2 mm. The reinforcing fibers contained in the PEEK resin-adhered fiber bundle have a length of 5 to 20 mm, but they are broken and shortened at the time of inj ection-molding, etc. However, they remain in the molded body with a length in the above range, thereby exhibiting high tensile strength or impact strength.

The molded body of the present invention may be produced by injection-molding the PEEK resin composition. On embodiment provides a method for producing a molded body, wherein: when a PEEK resin composition is injection molded to produce a molded body of a desired shape, the injection-molding is conducted by maintaining a cylinder temperature at 400°C or higher at the time of the injection-molding, and using a sprue having an inlet inner diameter of 3 to 10 mm as a sprue connected to an injection nozzle of an injection-molding machine.

The above production method of the present invention maintains a cylinder temperature at 400°C or higher during injection-molding. The cylinder temperature is 400°C or higher and preferably adjusted in accordance with the viscosity (MVR) of the PEEK resin.

During the injection-molding, the melted composition is injected into a cavity in a metal mold through a sprue, a runner and a gate from the injection nozzle of the injection-molding machine. The production method of the present invention uses, as the sprue connected to the injection nozzle of the injection-molding machine, a sprue having an inlet inner diameter of 3 to 10 mm, and preferably 4 to 8 mm on the side of the injection-molding machine.

### Examples

### (Used component)

PEEK resin-A: VESTAKEEP 1000G (MVR = 150 cm³/10min.), manufactured by Daicel-Evonik Ltd.

PEEK resin-B: VESTAKEEP-J ZV2401 (MVR = 130 cm³/10min.), manufactured by Daicel-Evonik Ltd.

Short fiber pellet: 2000GF30, manufactured by Daicel-Evonik Ltd. (PEEK resin pellet containing 30% by mass of glass short fibers, pellet length of 3 mm)

Short fiber pellet: 2000CF30, manufactured Daicel-Evonik Ltd. (PEEK resin pellet containing 30% by mass of carbon short fibers, pellet length of 3 mm)

Calcium stearate: SC-100, manufactured by Sakai Chemical Industry Co., Ltd.

### Production Example 1

Glass fiber roving (a bundle of about 4000 glass fibers; manufactured by Nippon Electric Glass Co., Ltd.) was heated at 230°C by a preheater, and then passed through a crosshead die. At that time, PEEK resin-A was melted by a twin-screw extruder (maximum cylinder temperature: 410°C) and fed from a resin feeder to a crosshead die (maximum setting temperature: 440°C), so that the PEEK resin was impregnated into a fiber bundle at a ratio of PEEK resin-A:fiber bundle = 50:50 parts by mass.

Thereafter, the fiber bundle was shaped by a shaping nozzle at an exit of the crosshead die and its shape was straightened by a forming roller; it was cut into a length of 9 mm by a pelletizer; and a PEEK resin-impregnated glass long fiber pellet was obtained. The pellet has the same length as glass fibers contained in the pellet. The thus-obtained resin-impregnated glass fiber bundle was cut and checked, and this revealed that glass long fibers were substantially parallel in the lengthwise direction and the resin was impregnated into a central portion.

### Production Example 2

A PEEK resin-impregnated glass long fiber pellet was obtained by the same method as in Production Example 1 except that PEEK resin-B was used as the PEEK resin.

### Production Example 3

Carbon fiber roving (a bundle of about 24000 carbon fibers; manufactured by Toray Industries, Inc.) was heated at 230°C by a preheater, and then passed through a crosshead die. At that time, PEEK resin-A was melted by a twin-screw extruder (maximum cylinder temperature: 410°C) and fed from a resin feeder to a crosshead die (maximum setting temperature: 440°C), so that the PEEK resin was impregnated into a fiber bundle at a ratio of PEEK resin-A:fiber bundle = 60:40 parts by mass.

Thereafter, the fiber bundle was shaped by a shaping nozzle at an exit of the crosshead die and its shape was straightened by a forming roller; it was cut into a length of 9 mm by a pelletizer; and a PEEK resin-impregnated carbon long fiber pellet was obtained. The pellet has the same length as carbon fibers contained in the pellet. The thus-obtained resin-impregnated carbon fiber bundle was cut and checked, and this revealed that carbon long fibers were substantially parallel in the lengthwise direction and the resin was impregnated into a central portion.

### Production Example 4

A PEEK resin-impregnated carbon long fiber pellet was obtained by the same method as in Production Example 3 except that PEEK resin-B was used as the PEEK resin.

### Production Example 5

A PEEK resin-impregnated carbon long fiber pellet was obtained by the same method as in Production Example 3 except that PEEK resin-B was used as the PEEK resin and the ratio between PEEK resin-B and fiber bundle was 70:30 parts by mass.

### Example 1

With 100 parts by mass of the PEEK resin-impregnated glass long fiber pellet produced in Production Example 1, 0.01 parts by mass of calcium stearate (SC-100 manufactured by Sakai Chemical Industry Co., Ltd.) was dry-blended to prepare a PEEK resin-impregnated glass long fiber pellet composition. This was injection-molded under conditions with a cylinder temperature of 405°C and a metal mold temperature of 200°C, providing an ISO multipurpose test specimen having a shape of Type A (thickness: 4 mm) (hereinafter, also referred to simply as "ISO test specimen"). The injection-molding machine used above had a sprue with an inlet inner diameter of 4 mm.

### Example 2

An ISO test specimen was obtained by the same method as in Example 1 except that the PEEK resin-impregnated glass long fiber pellet of Production Example 2 was used.

### Example 3

An ISO test specimen was obtained by the same method as in Example 1 except that the PEEK resin-impregnated glass long fiber pellet of Production Example 2 was used and the cylinder temperature condition for the injection molding was set at 430°C.

### Example 4

An ISO test specimen was obtained by the same method as in Example 1 except that the PEEK resin-impregnated glass long fiber pellet of Production Example 2 was used, the sprue had an inlet inner diameter of 7 mm, and the cylinder temperature condition for the injection-molding was set at 430°C.

### Comparative Example 1

An ISO test specimen was obtained by injection-molding 100 parts by mass of glass short fiber PEEK resin pellet (2000GF30) under the conditions with a cylinder temperature of 405°C and a mold temperature of 200°C. The injection-molding machine used above had a sprue with an inlet inner diameter of 4 mm.

### Comparative Example 2

An ISO test specimen was obtained by the same method as in Example 1 except that the PEEK resin-impregnated glass long fiber pellet of Production Example 2 was used and the cylinder temperature condition for injection-molding was set at 380°C.

### Example 5

An ISO test specimen was obtained by the same method as in Example 1 except that the PEEK resin-impregnated carbon long fiber pellet of Production Example 3 was used.

### Example 6

An ISO test specimen was obtained by the same method as in Example 1 except that the PEEK resin-impregnated carbon long fiber pellet of Production Example 4 was used.

### Example 7

An ISO test specimen was obtained by the same method as in Example 1 except that the PEEK resin-impregnated carbon long fiber pellet of Production Example 4 was used and the cylinder temperature condition for injection-molding was set at 430°C.

### Example 8

An ISO test specimen was obtained by the same method as in Example 1 except that the PEEK resin-impregnated carbon long fiber pellet of Production Example 5 was used and the cylinder temperature condition for injection molding was set at 430°C.

### Comparative Example 3

An ISO test specimen was obtained by injection-molding 100 parts by mass of carbon short fiber PEEK resin pellet (2000CF30) under the conditions with a cylinder temperature of 405°C and a metal mold temperature of 200°C. An injection-molding machine used above had a sprue with an inlet inner diameter of 4 mm.

### Comparative Example 4

An ISO test specimen was obtained by the same method as in Example 1 except that the PEEK resin-impregnated carbon long fiber pellet of Production Example 4 was used and the cylinder temperature condition for injection-molding was set at 380°C.

### (1) Weight average fiber length

About 0.5 g of sample was cut out from the above test specimen; the resin was dissolved and removed by sulfuric acid; and glass fibers or carbon fibers were extracted. From a portion (200 fibers) of the extracted glass fibers or carbon fibers, a weight average fiber length was determined. As a calculation formula, one disclosed in paragraphs [0044] and [0045] of JP-A 2006-274061 was used.

### (2) Tensile strength (MPa)

Measured in accordance with ISO527.

### (3) Bending strength (MPa)

Measured in accordance with ISO178.

### (4) Charpy impact strength (kJ/m²)

A notched Charpy impact strength was measured in accordance with ISO179/1eA.

**[Table 1]**

| | | Example | | | | Comparative Example | |
|---|---|---|---|---|---|---|---|
| | | 1 | 2 | 3 | 4 | 1 | 2 |
| Glass fiber-containing PEEK resin pellet | Production Example or Product Name | Production Example 1 | Production Example 2 | Production Example 2 | Production Example 2 | 2000 GF30 | Production Example 2 |
| | Glass fiber concentration (mass%) | 50 | 50 | 50 | 50 | 30 | 50 |
| | Resin-impregnated fiber pellet length (mm) | 9 | 9 | 9 | 9 | Short fiber pellet | 9 |
| Injection-molding | Calcium stearate (mass part) | 0.01 | 0.01 | 0.01 | 0.01 | None | 0.01 |
| | Cylinder temperature (°C) | 405 | 405 | 430 | 430 | 405 | 380 |
| | Sprue inlet inner diameter (mm) | 4 | 4 | 4 | 7 | 4 | 4 |
| Evaluation result | Weight average fiber length (mm) | 0.60 | 0.44 | 0.56 | 0.61 | 0.30 | 0.35 |
| | Tensile strength (MPa) | 203 | 197 | 209 | 223 | 178 | 184 |
| | Bending strength (MPa) | 293 | 288 | 310 | 325 | 260 | 266 |
| | Charpy impact strength (kJ/m²) | 18 | 17 | 19 | 22 | 10 | 14 |

**[Table 2]**

| | | Example | | | | Comparative Example | |
|---|---|---|---|---|---|---|---|
| | | 5 | 6 | 7 | 8 | 3 | 4 |
| Carbon fiber-containing PEEK resin pellet | Production Example or Product Name | Production Example 3 | Production Example 4 | Production Example 4 | Production Example 5 | 2000 CF30 | Production Example 4 |
| | Carbon fiber concentration (mass%) | 40 | 40 | 40 | 30 | 30 | 40 |
| | Resin-impregnated fiber pellet length (mm) | 9 | 9 | 9 | 9 | Short fiber pellet | 9 |
| Injection-molding | Calcium stearate (mass part) | 0.01 | 0.01 | 0.01 | 0.01 | None | 0.01 |
| | Cylinder temperature (°C) | 405 | 405 | 430 | 430 | 405 | 380 |
| | Sprue inlet inner diameter (mm) | 4 | 4 | 4 | 4 | 4 | 4 |
| Evaluation result | Weight average fiber length (mm) | 0.75 | 0.60 | 0.74 | 0.80 | 0.30 | 0.37 |
| | Tensile strength (MPa) | 285 | 280 | 293 | 309 | 257 | 267 |
| | Bending strength (MPa) | 445 | 435 | 463 | 437 | 361 | 407 |
| | Charpy impact strength (kJ/m²) | 16 | 14 | 18 | 15 | 9 | 10 |

### Industrial Applicability

A molded body formed of the PEEK resin composition of the present invention has high mechanical properties while maintaining heat resistance, chemical resistance and flame resistance that are originally exhibited by a PEEK resin; and can be used for, e.g., electrical and electronic applications such as personal computers or semiconductor components; automotive applications such as gears or bearings, housings for engines and the like; or medical equipment and the like.

## Claims

1. A molded body formed of a PEEK resin composition comprising a PEEK resin-adhered fiber bundle, wherein:
the PEEK resin-adhered fiber bundle comprises a PEEK resin adhered to a fiber bundle with a length of 5 to 20 mm;
a fiber content ratio in the PEEK resin-adhered fiber bundle is 10 to 70% by mass; and
a weight average fiber length in the molded body is 0.4 to 3 mm,
wherein the PEEK resin-adhered fiber bundle is a PEEK resin-impregnated fiber bundle;
wherein the PEEK resin-adhered fiber bundle includes a bundle in a state where the PEEK resin is impregnated into a center portion of the fiber bundle and the PEEK resin is infiltrated between fibers at the center portion forming the fiber bundle.

2. The molded body formed of a PEEK resin composition according to Claim 1, wherein the fiber contained in the PEEK resin-adhered fiber bundle is a glass fiber or a carbon fiber.

3. The molded body formed of a PEEK resin composition according to Claim 1 or 2, wherein the PEEK resin has an MVR (temperature: 380°C, load: 5 kg) of 50 cm³/10 min. or more.

4. The molded body formed of a PEEK resin composition according to any one of Claims 1 to 3, further comprising a lubricant selected from fatty acid amides, fatty acid esters, fatty acid metal salts and polyethylene wax, wherein
the lubricant is contained in an amount of 0.005 to 0.1 parts by mass relative to 100 parts by mass of the PEEK resin-adhered fiber bundle.

5. The molded body formed of a PEEK resin composition according to Claim 4, wherein the lubricant is selected from ethylenebis stearic acid amide, montan acid ester wax, polyglycerol stearate, calcium stearate, magnesium stearate and polyethylene wax.

6. A method for producing a molded body of any one of Claims 1 to 5,
wherein, when a PEEK resin composition is injection molded to produce a molded body having a desired shape, the injection-molding is conducted by maintaining a cylinder temperature at 400°C or higher at the time of the injection-molding, and using a sprue having an inlet inner diameter of 3 to 10 mm as a sprue connected to an injection nozzle of an injection-molding machine.

## Patentansprüche

1. Formkörper, gebildet einer PEEK-Harzzusammensetzung, umfassend ein mit PEEK-Harz verklebtes Faserbündel, wobei:
das mit PEEK-Harz verklebte Faserbündel ein PEEK-Harz umfasst, das an ein Faserbündel mit einer Länge von 5 bis 20 mm verklebt ist;
ein Fasergehaltsverhältnis in dem mit PEEK-Harz verklebten Faserbündel von 10 bis 70 Massenprozent ist; und
eine gewichtsmittlere Faserlänge im Formkörper von 0,4 bis 3 mm ist,
wobei das mit PEEK-Harz verklebte Faserbündel ein mit PEEK-Harz imprägniertes Faserbündel ist;
wobei das mit PEEK-Harz verklebte Faserbündel ein Bündel in einem Zustand beinhaltet, in dem das PEEK-Harz in einen Mittelteil des Faserbündels imprägniert ist und das PEEK-Harz zwischen die Fasern im Mittelteil infiltriert ist, die das Faserbündel bilden.

2. Der Formkörper aus einer PEEK-Harzzusammensetzung nach Anspruch 1, wobei die in dem mit PEEK-Harz verklebten Faserbündel enthaltene Faser eine Glasfaser oder eine Kohlenstofffaser ist.

3. Der Formkörper aus einer PEEK-Harzzusammensetzung nach Anspruch 1 oder 2, wobei das PEEK-Harz eine MVR (Temperatur: 380°C, Last: 5 kg) von 50 cm³/10 min. oder mehr besitzt.

4. Der Formkörper aus einer PEEK-Harzzusammensetzung nach irgendeinem der Ansprüche 1 bis 3, weiter umfassend ein Schmiermittel, das aus Fettsäureamiden, Fettsäureestern, Fettsäuremetallsalzen und Polyethylenwachs ausgewählt ist, wobei
das Schmiermittel in einer Menge von 0,005 bis 0,1 Masseteilen, bezogen auf 100 Masseteile des mit PEEK-Harz verklebten Faserbündels, enthalten ist.

5. Der Formkörper aus einer PEEK-Harzzusammensetzung nach Anspruch 4, wobei das Schmiermittel ausgewählt ist aus Ethylenbisstearinsäureamid, Montansäureesterwachs, Polyglycerinstearat, Calciumstearat, Magnesiumstearat und Polyethylenwachs.

6. Verfahren zu Herstellen eines Formkörpers nach irgendeinem der Ansprüche 1 bis 5,
wobei, wenn eine PEEK-Harzzusammensetzung spritzgegossen wird, um einen Formkörper mit einer gewünschten Form herzustellen, das Spritzgießen durchgeführt wird, indem eine Zylindertemperatur zum Zeitpunkt des Spritzgießens auf 400°C oder höher gehalten wird und eine Düsenspitze, besitzend eine Einlass-Innendurchmesser von 3 bis 10 mm, als eine mit einer Einspritzdüse einer Spritzgießmaschine verbundene Düsenspitze verwendet wird.

## Revendications

1. Corps moulé formé d'une composition de résine de PEEK comprenant un faisceau de fibres adhérant à de la résine de PEEK, dans lequel :
le faisceau de fibres adhérant à de la résine de PEEK comprend une résine de PEEK qui est faite adhérer à un faisceau de fibres ayant une longueur de 5 à 20 mm ;
un rapport de la teneur en fibres dans le faisceau de fibres adhérant à de la résine de PEEK est de 10 à 70 % en masse ; et
une longueur de fibre moyenne pondérée dans le corps moulé est de 0,4 à 3 mm,
dans lequel le faisceau de fibres adhérant à de la résine de PEEK est un faisceau de fibres imprégné de résine de PEEK ;
dans lequel le faisceau de fibres adhérant à de la résine de PEEK comporte un faisceau dans un état dans lequel la résine de PEEK est imprégnée dans une partie centrale du faisceau de fibres et la résine de PEEK est infiltrée entre les fibres au niveau de la partie centrale formant le faisceau de fibres.

2. Corps moulé formé d'une composition de résine de PEEK selon la revendication 1, dans lequel la fibre contenue dans le faisceau de fibres adhérant à de la résine de PEEK est une fibre de verre ou une fibre de carbone.

3. Corps moulé formé d'une composition de résine de PEEK selon la revendication 1 ou 2, dans lequel la résine de PEEK a un MVR (température : 380 °C, charge : 5 kg) de 50 cm³/10 min ou plus.

4. Corps moulé formé d'une composition de résine de PEEK selon l'une quelconque des revendications 1 à 3, comprenant en outre un lubrifiant choisi parmi des amides d'acide gras, des esters d'acide gras, des sels métalliques d'acide gras et de la cire de polyéthylène, dans lequel
le lubrifiant est présent à hauteur de 0,005 à 0,1 partie en masse pour 100 parties en masse du faisceau de fibres adhérant à une résine de PEEK.

5. Corps moulé formé d'une composition de résine de PEEK selon la revendication 4, dans lequel le lubrifiant est choisi parmi un amide d'acide éthylène-bis-stéarique, une cire d'ester d'acide montanique, du stéarate de polyglycérol, du stéarate de calcium, du stéarate de magnésium et de la cire de polyéthylène.

6. Procédé de production d'un corps moulé selon l'une quelconque des revendications 1 à 5,
dans lequel, lorsqu'une composition de résine de PEEK est moulée par injection pour produire un corps moulé ayant une forme souhaitée, le moulage par injection est effectué en maintenant une température de cylindre à 400 °C ou plus au moment du moulage par injection, et en utilisant une masselotte ayant un diamètre intérieur d'entrée de 3 à 10 mm en tant que masselotte reliée à une buse d'injection d'une machine de moulage par injection.
